# EUROPEAN PATENT APPLICATION

(11) **EP 4 660 166 A1**
(43) Date of publication of application: **10.12.2025**
(21) Application number: 23919599.3
(22) Date of filing: 30.01.2023
(51) Int. Cl.: C03C 15/00

(54) **NET-LIKE STRUCTURE LAYER FORMATION DEVICE AND METHOD FOR PRODUCING GLASS EQUIPPED WITH NET-LIKE STRUCTURE LAYER**

(71) Applicant: Gotoh Educational Corporation, Tokyo 150-0043 (JP); Showa Shinku Co., Ltd., Sagamihara-shi, Kanagawa 252-0244 (JP)
(72) Inventor: FUJIMA, Takuya, Tokyo 158-8557 (JP); TAKIMOTO, Masayuki, Sagamihara-shi, Kanagawa 252-0244 (JP); ITO, Toshinobu, Sagamihara-shi, Kanagawa 252-0244 (JP); KATO, Masahiro, Sagamihara-shi, Kanagawa 252-0244 (JP)
(74) Representative: v. Bezold & Partner Patentanwälte - PartG mbB
(86) International application number: PCT/JP2023/002852
(87) International publication number: WO 2024/161454

(57) **Abstract**

A net-like structure layer production device (1) includes: a pressure vessel (10) that houses, under predetermined pressure, a treatment solution (21) and a glass base material (22) immersed in the treatment solution (21); pressurization means for pressurizing the pressure vessel (10); and stirring means for stirring the treatment solution (21), and a net-like structure layer is produced on a surface of the glass base material (22) in the treatment solution (21) under an alkaline environment.

## Description

### Technical Field

The present disclosure relates to a net-like structure layer production device that produces a net-like structure layer on a surface of a glass base material, and a method for manufacturing glass including the net-like structure layer.

### Background Art

A glass base material is used for cars, aircraft, ships, railways, windows for building materials, outer walls, doors, mirrors, showcases, displays for electronic equipment, lenses of cameras, display screens of smartphones and the like, or the like. A surface of the glass base material is required to have a soil-resistant function, a water-repellent function, a hydrophilic function, an antireflection function, and the like (hereinafter referred to as "the soil-resistant function and the like") according to a use and a product to be used. For example, in order to provide the antireflection function to the glass base material, laminating a multilayer film of a dielectric is generally known. However, a technique for laminating a film on the glass base material has limitations in terms of a heat-resistant property, a chemical-resistant property, and a wear-resistant property. Meanwhile, as an excellent structure for providing a plurality of pieces of functionality to the glass base material, there is a structure including a net-like structure layer on the surface of the glass base material as indicated in Patent Literature 1.

In order to produce the net-like structure layer on the surface of the glass base material, Patent Literature 2 presents production by immersing the glass base material in a potassium hydrogencarbonate aqueous solution and heating a temperature of the solution to 30 to 90°C, preferably 50 to 80°C.

### Citation List

### Patent Literature

Patent Literature 1: Japanese Patent No. 6211247
Patent Literature 2: International Patent Publication No. WO2016/021558

### Summary of Invention

### Technical Problem

However, in order to produce the net-like structure layer having a sufficient thickness by the production method disclosed in Patent Literature 2, a long immersion time close to 24 hours is required. Further, there are problems that the net-like structure layer having an optimum depth for exhibiting preferable effects that are the soil-resistant function and the like is not produced on the surface of the glass base material only by heating the solution, and, furthermore, unevenness occurs on the surface, and uniform treatment is difficult.

The present disclosure has been made in view of the circumstances described above, and has an objective to provide a net-like structure layer production device that produces a net-like structure layer having a sufficient depth on a surface of a glass base material and can also achieve uniform surface treatment in a short time, and a method for manufacturing glass including the net-like structure layer.

### Solution to Problem

A net-like structure layer production device according to a first aspect of the present disclosure is a net-like structure layer production device that produces a net-like structure layer on a surface of a glass base material, the net-like structure layer production device including:
a pressure vessel that houses, under predetermined pressure, a treatment solution and a glass base material immersed in the treatment solution;
pressurization means for pressurizing the pressure vessel; and
stirring means for stirring the treatment solution, wherein
a net-like structure layer is produced on a surface of the glass base material under an alkaline environment.

The net-like structure layer production device may further include heating means for heating an inside of the pressure vessel.

The stirring means may be base material rotation means for stirring the treatment solution by rotating the glass base material.

The stirring means may be solution stirring means for directly stirring the treatment solution by a stirring member.

The net-like structure layer production device may further include control gas supply means for supplying, to the treatment solution, control gas that controls a treatment speed of the treatment solution.

The treatment solution may be a solution containing hydrogencarbonate, and
the control gas supply means may supply the same control gas as gas generated by a reaction of the treatment solution.

The net-like structure layer production device may further include a base material holding member that holds the glass base material in the treatment solution, wherein
the base material rotation means may rotate the base material holding member.

The glass base material may be treated in the treatment solution at 100°C or higher by the heating means.

The base material rotation means may rotate the base material holding member in a non-contact manner by a first magnetic body attached to the base material holding member and a second magnetic body disposed outside a vessel that houses the treatment solution.

The net-like structure layer production device may further include a solution vessel disposed inside the pressure vessel, wherein
the treatment solution and the glass base material may be housed in the solution vessel.

The pressure vessel or the solution vessel may be made of an alkali-resistant material.

A method according to a second aspect of the present disclosure is a method for manufacturing glass including a net-like structure layer by treating glass by a treatment solution in a pressure vessel, the method including:
pressurizing an inside of the pressure vessel;
stirring the treatment solution in the pressure vessel; and
producing a net-like structure layer on a surface of a glass base material by the treatment solution under an alkaline environment.

### Advantageous Effects of Invention

The present disclosure can provide a net-like structure layer production device that produces a net-like structure layer having a sufficient depth on a surface of a glass base material and can also achieve uniform surface treatment in a short time, and a method for manufacturing glass including the net-like structure layer.

### Brief Description of Drawings

FIG. 1 is a schematic diagram of a net-like structure layer production device according to an embodiment of the present disclosure;
FIG. 2 is a diagram illustrating a longitudinal cross-sectional view of the net-like structure production device according to the present embodiment;
FIG. 3 is an exploded perspective view of main components of the net-like structure layer production device;
FIG. 4A is a diagram illustrating a principle of driving of a non-contact driver, and illustrates a relationship between a first driving magnetization rotator and a first driven magnetization rotator;
FIG. 4B is a diagram illustrating the principle of the driving of the non-contact driver, and illustrates a relationship between a second driving magnetization rotator and a second driven magnetization rotator;
FIG. 5 is a schematic diagram of Modified Example 1;
FIG. 6A is a graph that compares a relationship between a change in a film thickness of a net-like structure layer and a treatment time by presence or absence of a supply of carbon dioxide;
FIG. 6B illustrates a scanning electron microscope (hereinafter referred to as an "SEM") image, which uses an SEM, of a section of a glass base material when a concentration of carbon dioxide is changed;
FIG. 7 is a schematic diagram of Modified Example 2;
FIG. 8 is a schematic diagram of Modified Example 3;
FIG. 9 is a schematic diagram of Modified Example 4;
FIG. 10 is a schematic diagram of Modified Example 5;
FIG. 11A is an SEM image of the glass base material subjected to surface treatment, and is an SEM image of a surface of the glass base material; and
FIG. 11B is an SEM image of the glass base material subjected to surface treatment, and is an SEM image of a section of the glass base material.

### Description of Embodiments

Hereinafter, an embodiment of a net-like structure layer production device according to the present disclosure is described with reference to drawings. The embodiment described below is used for description, and does not limit the scope of the present disclosure. Therefore, a person skilled in the art can adopt an embodiment in which each element or all elements of the embodiment are replaced with equivalent elements, but the embodiment is also included in the scope of the present disclosure.

### Embodiment

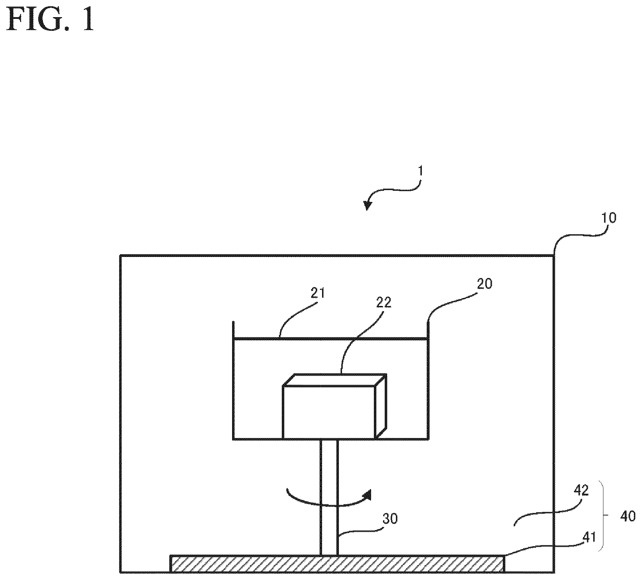

A structure of a film production device being one embodiment of the present disclosure is described with reference to FIGS. 1 to 4. The net-like structure layer production device according to the present embodiment is a device that immerses a glass base material in a treatment solution and produces a fine net-like structure layer on a surface of the glass base material. The glass having the surface treated by the net-like structure layer production device according to the present embodiment is defined as hierarchical nano porous layer (HNL) glass.

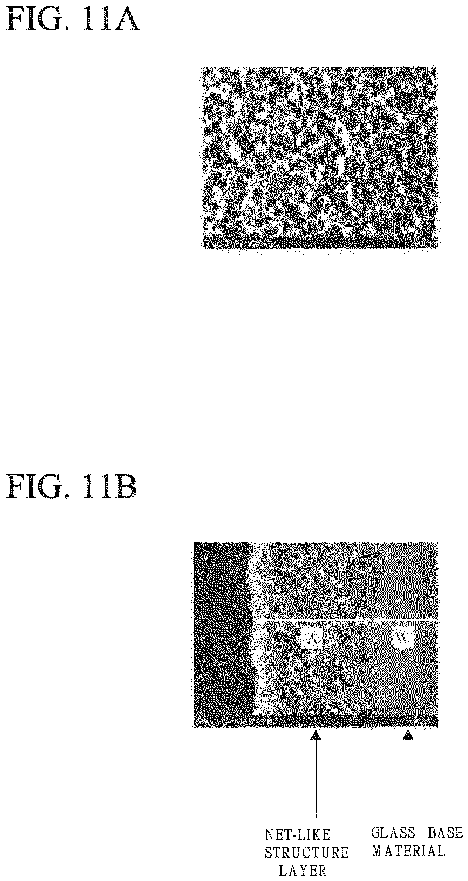

FIG. 11A is an SEM image, which uses an SEM, of a surface of a sample of the HNL glass, and FIG. 11B is an SEM image of a section of the sample. As illustrated in the images, the HNL glass has meshes of a three-dimensional net-like structure layer in which the meshes are gradually smaller in an inward direction from the surface. The HNL glass exhibits excellent hydrophilicity, has a self-cleaning effect of isolating and removing dirt, and has functions that are the soil-resistant function and the like.

A mesh size of the surface of the net-like structure layer is preferably 1 µmm or less, which is smaller than a size of general dust, and a thickness of the net-like structure layer is preferably appropriately selected according to a target function.

### Overall Configuration of Net-like Structure Layer Production Device

FIG. 1 is a schematic diagram illustrating an overall configuration of a net-like structure layer production device 1 according to the present embodiment. The net-like structure layer production device 1 includes a pressure vessel 10, a solution vessel 20 disposed inside the pressure vessel 10, stirring means 30 for stirring a treatment solution 21 put in the solution vessel 20, and pressurization means 40 for pressurizing the inside of the pressure vessel 10. The net-like structure layer production device 1 is a device that treats a surface of a glass base material 22 by putting the glass base material 22 and the treatment solution 21 in the solution vessel 20 and applying pressure, and also stirring the treatment solution 21 by the stirring means 30.

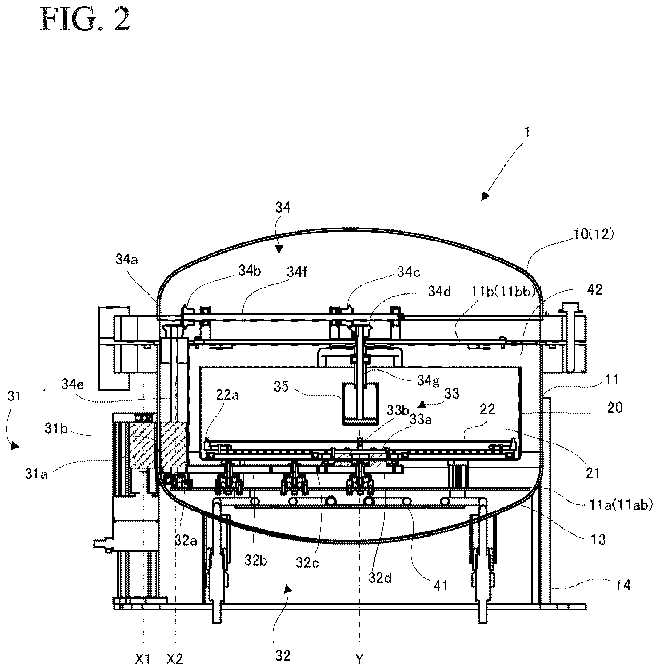

As illustrated in FIG. 2, the pressure vessel 10 is a hermetic vessel designed to resist pressure from the inside or the outside, and a pressure vessel that can hold inner pressure in a higher state than atmospheric pressure is used in the present embodiment. The pressure vessel 10 is made of stainless steel having high pressure resistance. Metal having pressure resistance and alkali resistance may be used, and the pressure vessel 10 may be partially made of alumina (Al₂O₃) and the like.

The pressure vessel 10 includes a barrel portion 11 having a cylindrical shape, an upper end plate 12 that blocks an upper end portion of the barrel portion 11 and has a hemispherical shape, a lower end plate 13 that blocks a lower end portion of the barrel portion 11 and has a hemispherical shape, and a leg 14 being a leg for installing the pressure vessel 10 on a floor surface.

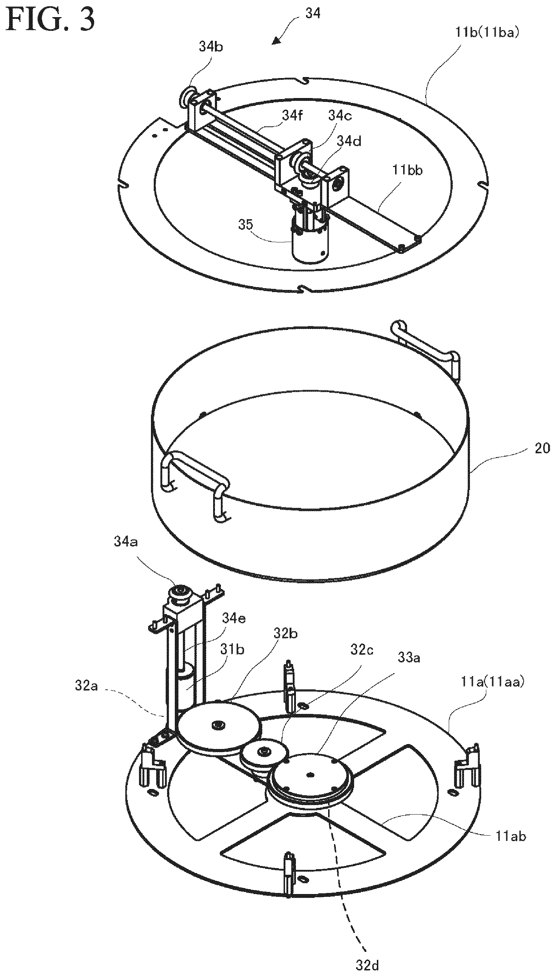

The pressure vessel 10 includes a support member for installing the stirring means 30. Specifically, as illustrated in FIGS. 2 and 3, the pressure vessel 10 includes a first support portion 11a attached to a bottom portion of the pressure vessel 10, and a second support portion 11b attached to an upper portion. The first support portion 11a includes a support portion main body 11aa having a circular shape along an inner periphery of the barrel portion 11, and a gear support portion 11ab that is a plate-shaped member provided to cross an inner portion of the support portion main body 11aa and is used for installing a spur gear being one element of the stirring means 30 and described below. The second support portion 11b includes a support portion main body 11ba having a circular shape along the inner periphery of the barrel portion 11, and a gear support portion 11bb that is a plate-shaped member attached to the support portion main body 11ba across the support portion main body 11ba in a diameter direction and is used for installing a bevel gear being one element of the stirring means 30 and described below.

The solution vessel 20 is a cylindrical vessel for putting the glass base material 22 in the treatment solution 21, and is disposed inside the pressure vessel 10. The solution vessel 20 contains the treatment solution 21 therein, and is thus molded of a material not to be corroded by the treatment solution 21, specifically, an alkali-resistant material, for example, ceramic such as alumina, resin, and stainless steel subjected to Teflon (registered trademark) coating. As illustrated in FIG. 2, a base material holding member 22a for placing and holding the glass base material 22 is installed in the solution vessel 20. Note that the pressure vessel 10 is also preferably made of an alkali-resistant material.

A weak alkaline salt solution is used as the treatment solution 21. In the present embodiment, a sodium hydrogencarbonate (NaHCO₃) aqueous solution is used. The present disclosure is not limited to sodium hydrogencarbonate, and a potassium hydrogencarbonate (KHCO₃) aqueous solution and the other alkaline aqueous solutions can also be used.

As the glass base material 22, soda lime glass, borosilicate glass, and the like are used. Glass provided on a surface of resin or sapphire can also be used as the glass base material 22. The glass base material 22 is not limited to a base material made of only a glass material, and includes a material acquired by bonding a non-glass material and a glass material, and a material acquired by depositing a thin film made of a glass material on a surface of a non-glass material by a technique such as sputtering, vapor deposition, and coating. The glass base material 22 is placed on the base material holding member 22a while a plate surface of the glass base material 22 is set horizontal to a bottom portion of the solution vessel 20. Then, the glass base material 22 is rotated by the stirring means 30 while the plate surface is set horizontal.

The stirring means 30 is means for stirring the treatment solution 21, and is broadly divided into a system for rotating the glass base material 22 immersed in the treatment solution 21 (hereinafter referred to as a "base material rotation system"), and a system for directly stirring the treatment solution 21 itself by a stirring member (hereinafter referred to as a "solution stirring system"). In the present embodiment, a system combining the base material rotation system and the solution stirring system is used. In the present embodiment, a pattern combining the two stirring systems is described as one representative example, and the other stirring patterns are described in modified examples described below.

As illustrated in FIGS. 2 and 3, the stirring means 30 includes a first non-contact driver 31, a first contact driver 32, a second non-contact driver 33, and a second contact driver 34. The non-contact drivers 31 and 33 are drivers that use a driving member serving as a first magnetic body and a driven member serving as a second magnetic body, and transmit power without contact between the first magnetic body and the second magnetic body. The contact drivers 32 and 34 are drivers that transmit power while bringing the driving member and the driven member into contact by a gear.

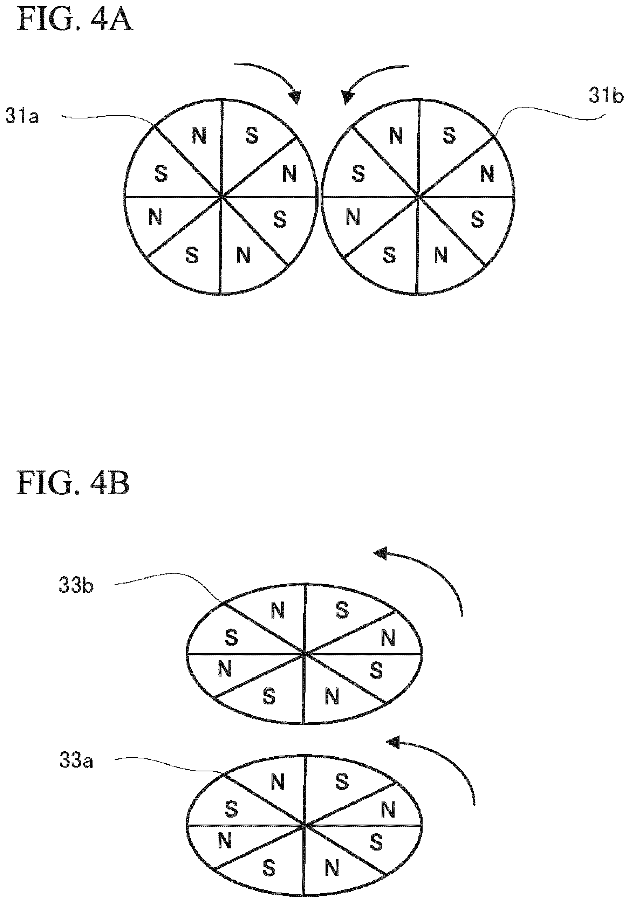

As indicated by hatch lines in FIG. 2, the first non-contact driver 31 includes a first driving rotator 31a and a first driven rotator 31b. The first driving rotator 31a is a cylindrical rotator that rotates about a rotational axis X1 vertical along a side surface of the barrel portion 11 outside the pressure vessel 10, and is rotated by a driver such as a motor (not illustrated). As illustrated in FIG. 4A, a periphery of the rotator is magnetized alternately by the south pole and the north pole. The first driven rotator 31b is a cylindrical rotator that rotates about a rotational axis X2 parallel to the first driving rotator 31a, and, similarly to the first driving rotator 31a, an outer periphery of the rotator is magnetized alternately by the south pole and the north pole. The first driven rotator 31b is disposed inside the pressure vessel 10, and is rotated in a non-contact manner by rotation of, by the driver, the first driving rotator 31a disposed outside the pressure vessel 10. By the rotation in the non-contact manner, an introduction port for driving becomes unnecessary, and an alkali-resistant sealing structure can be omitted. Not only complication of a device structure can be avoided, but the device can also be made compact. Further, an effect of suppressing contamination in the pressure vessel 10 is also acquired.

As illustrated in FIGS. 2 and 3, the first contact driver 32 is constituted by engaging a first spur gear 32a, a second spur gear 32b, a third spur gear 32c, and a fourth spur gear 32d that are four spur gears. The first spur gear 32a is coaxially coupled to a lower portion of the first driven rotator 31b, and is rotated by rotation of the first driven rotator 31b. The four spur gears are arranged in an order of the first spur gear 32a, the second spur gear 32b, the third spur gear 32c, and the fourth spur gear 32d on the gear support portion 11ab at the bottom portion of the pressure vessel 10. A rotational axis of the fourth spur gear 32d is disposed at the center of the solution vessel 20. The four gears are combined in such a way as to acquire an appropriate reduction ratio by changing each diameter.

As indicated by hatch lines in FIG. 2, the second non-contact driver 33 includes a second driving rotator 33a and a second driven rotator 33b. The second driving rotator 33a is a disc rotator attached to an upper surface of the fourth spur gear 32d. The second driving rotator 33a is disposed on the same rotational axis Y as the rotational axis of the fourth spur gear 32d, and is rotated by rotation of the fourth spur gear 32d. As illustrated in FIG. 4B, a plate surface of the second driving rotator 33a is magnetized alternately by the south pole and the north pole on the disc. The second driven rotator 33b is a disc rotator fixed to the inside of a bottom surface of the solution vessel 20. The second driven rotator 33b is rotated about the same rotational axis as the rotational axis Y of the second driving rotator 33a. Similarly to the second driving rotator 33a, the second driven rotator 33b is magnetized alternately by the south pole and the north pole on the disc. The second driven rotator 33b is rotated by rotation of the second driving rotator 33a, and rotates the base material holding member 22a. The first non-contact driver 31, the first contact driver 32, and the second non-contact driver 33 constitute the stirring means 30 in the base material rotation system.

As illustrated in FIGS. 2 and 3, the second contact driver 34 is a driver that transmits power by combining four bevel gears, and includes a first bevel gear 34a, a second bevel gear 34b, a third bevel gear 34c, and a fourth bevel gear 34d. The first bevel gear 34a is attached to an upper end portion of a first drive shaft 34e coaxial with the rotational axis of the first driven rotator 31b. The first bevel gear 34a engages with the second bevel gear 34b attached to one end portion of a second drive shaft 34f disposed orthogonally to the first drive shaft 34e. The first bevel gear 34a and the second bevel gear 34b engage with each other, and thus a direction of force of rotation is converted by 90 degrees and the second drive shaft 34f is rotated. The third bevel gear 34c is attached to another end portion of the second drive shaft 34f. The third bevel gear 34c engages with the fourth bevel gear 34d attached to one end portion of a third drive shaft 34g disposed orthogonally to the second drive shaft 34f. Rotation of the third bevel gear 34c has a direction of force of rotation converted by 90 degrees by the fourth bevel gear 34d, and the third drive shaft 34g is rotated. A stirring wing 35 is attached to another end portion of the third drive shaft 34g. The stirring wing 35 is rotated by rotation of the third drive shaft 34g, and the treatment solution 21 in the solution vessel 20 is stirred. The stirring means 30 in the solution stirring system is provided by the first non-contact driver 31 and the second contact driver 34. Further, the second bevel gear 34b, the second drive shaft 34f, the third bevel gear 34c, the fourth bevel gear 34d, the third drive shaft 34g, and the stirring wing 35 are supported by the gear support portion 11bb.

The stirring wing 35 is disposed at the center of the solution vessel 20, and a stirring wing having any shape may be used as long as the stirring wing can stir the treatment solution 21 in the solution vessel 20, such as a propeller wing, a paddle wing, and an anchor wing.

The pressurization means 40 is means for applying pressure equal to or higher than atmospheric pressure to the inside of the pressure vessel 10, and, in the present embodiment, a predetermined amount of water is put in the pressure vessel 10, vapor 42 is generated by heating the water by a heater 41 being heating means, and the inside of the pressure vessel 10 is pressurized. It is assumed that a temperature in the pressure vessel 10 is, for example, 100 to 150°C, and pressure is, for example, 1 to 5 kgf/cm² (atmospheric pressure is 1 kgf/cm²). With the pressurization means 40, a temperature of the treatment solution 21 can be maintained at 100°C or higher. A temperature of the treatment solution 21 is preferably 100°C or higher and 374°C or lower and more preferably 105°C or higher and 140°C or lower by setting a temperature not exceeding a supercritical temperature as an upper limit.

As illustrated in FIG. 2, the heater 41 is disposed on the bottom portion of the pressure vessel 10, and a sheathed heater in which a nichrome wire being a heat generator is covered with a metal pipe is used. In the present embodiment, the sheathed heater is curved and disposed in a meandering manner on the entire bottom portion of the pressure vessel 10 and heats the entire bottom portion, but another heating source such as a carbon heater and a cartridge heater may be used, or a heater may be provided outside the pressure vessel. The heater 41 is also used for performing temperature control in the pressure vessel 10 in addition to being used for generating the vapor 42. By performing temperature control in the pressure vessel 10, a surface treatment rate of the glass base material 22 can be controlled.

### Method for Manufacturing Glass Including Net-like Structure Layer

Glass including a net-like structure layer (including glass provided on a surface of a non-glass material) is manufactured by a method described as follows by using the net-like structure layer production device 1 described above. Each step may be simultaneously subjected to parallel processing. First, an alkaline aqueous solution is put as the treatment solution 21 in the solution vessel 20, and the glass base material 22 is immersed in the treatment solution 21. A predetermined amount of water is put in the pressure vessel 10, the water in the pressure vessel 10 is evaporated into the vapor 42 by turning ON the heater 41, and the pressure vessel 10 is pressurized (pressurization step).

When the inside of the pressure vessel 10 has predetermined pressure, the stirring means 30 is caused to operate (stirring step). In other words, the first non-contact driver 31 is driven by a motor, and power is transmitted from the first non-contact driver 31 to the first contact driver 32 and the second non-contact driver 33 in this order. By the power transmitted to the second non-contact driver 33, the base material holding member 22a rotates about the rotational axis Y, and the glass base material 22 immersed in the solution vessel 20 also rotates. Then, the treatment solution 21 is stirred by the rotation of the glass base material 22. As the treatment solution 21, a weak alkaline aqueous solution is used, but an acid or neutral aqueous solution may be used. In a case of the acid or neutral aqueous solution, the acid or neutral aqueous solution changes to an alkaline aqueous solution with a lapse of time. The glass base material 22 is placed under an alkaline environment, and a net-like structure layer is produced on a surface of the glass base material 22. Since the treatment is advanced under pressurization, the net-like structure layer having a sufficient thickness capable of exhibiting the soil-resistant function and the like is produced on the surface of the glass base material 22 (net-like structure layer production step).

The glass base material 22 is disposed in the solution vessel 20 while the plate surface of the glass base material 22 is set horizontal, and the stirred treatment solution 21 can be equally brought into contact with the plate surface of the glass base material 22, and thus the surface can be more uniformly treated than a case where the plate surface is disposed vertically.

The stirring wing 35 is rotated by the first non-contact driver 31 and the second contact driver 34. The stirring wing 35 can directly stir the treatment solution 21. The stirring wing 35 is used in combination with the motion of stirring the treatment solution 21 by rotating the base material holding member 22a and the glass base material 22, and thus a combined effect by stirring is exhibited.

With the stirring means 30, temperature unevenness in the treatment solution 21 and concentration unevenness of the solution are reduced, and the surface of the glass base material 22 is subjected to uniform surface treatment, and thus the uniform net-like structure layer can be produced on the surface of the glass base material 22.

When the net-like structure layer having a desired thickness is produced on the surface of the glass base material 22, the operation is stopped, and the treated glass base material 22 is taken out of the treatment solution 21. Whether the net-like structure layer having the desired thickness is produced is determined by measuring a film thickness by a spectral optical monitor and the like. When the desired film thickness is reached, the treatment may be ended by discharging the treatment solution 21 from the solution vessel 20 and introducing water into the solution vessel 20.

The net-like structure layer produced in such a manner can also be provided with a surface characteristic having a desired function by coating or filling a functional material having an anchor effect and various functions.

As described above, a glass base material is treated by using the net-like structure layer production device according to the present embodiment, and thus hierarchical nano porous layer glass including a net-like structure layer can be manufactured.

Although one example of the net-like structure layer production device 1 is described in the present embodiment, the present disclosure is not limited to the above-described embodiment. Particularly, various aspects can be applied as a method for stirring a solution and pressurization means. Hereinafter, description is given by indicating modified examples.

### Modified Example 1

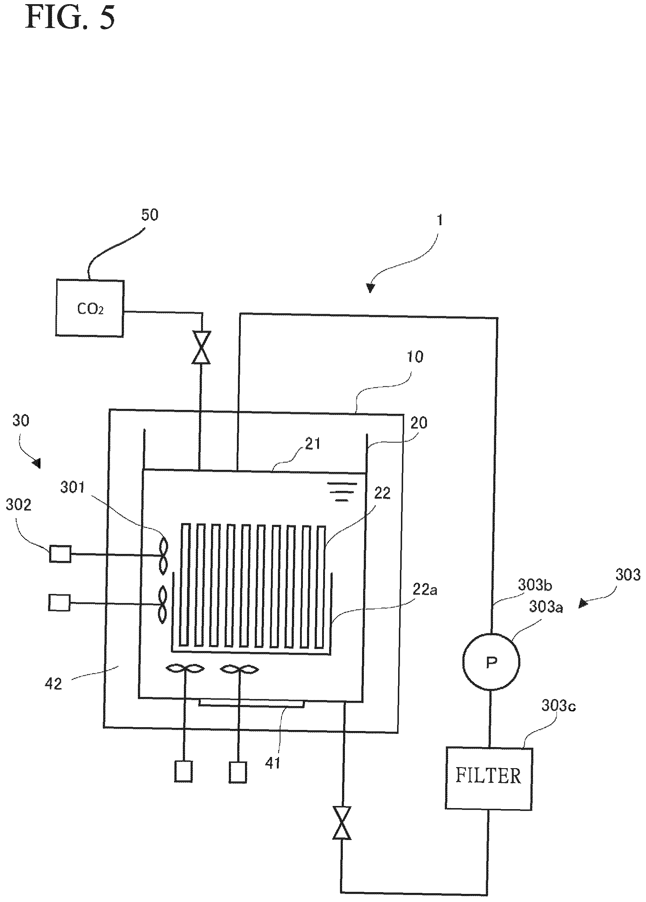

Modified Example 1 is described with reference to FIG. 5. A basic configuration of the net-like structure layer production device 1 is similar to that in the embodiment, and the solution vessel 20 is disposed in the pressure vessel 10, the treatment solution 21 is put in the solution vessel 20, and the glass base material 22 is immersed in the treatment solution 21. The inside of the pressure vessel 10 is pressurized by generating the vapor 42 by the heater 41. In order to execute a great number of pieces of base material treatment at once, a plurality of the glass base materials 22 is held by the base material holding member 22a such as a rack.

As the stirring means 30, only the solution stirring system is used, and the stirring means 30 includes a plurality of stirring wings 301 and a motor 302 being a driver that rotates the stirring wings 301. In the present modified example, four stirring wings 301 are used. Two of the four stirring wings 301 are disposed on the bottom portion of the solution vessel 20, and the other two are disposed on a side portion of the solution vessel 20. The number of the stirring wings 301 is not limited to four, and may be smaller or greater than four.

The stirring wings 301 disposed on the bottom portion and the side portion of the solution vessel 20 are rotated by the motor 302, and thus the treatment solution 21 in the solution vessel 20 can be equally and sufficiently stirred. The treatment solution 21 is stirred, and thus treatment unevenness of the surface of the glass base material 22 can be reduced.

In the present modified example, the net-like structure layer production device 1 further includes circulation means 303 for circulating the treatment solution 21. The circulation means 303 includes a pump 303a, a pipe 303b that connects the pump 303a and the solution vessel 20, and a filter 303c provided on the pipe 303b. By operating the pump 303a, the treatment solution 21 is sucked out of the bottom portion of the solution vessel 20 and then passes through the filter 303c, and a material substance eluted from the glass base material 22 is collected by the filter 303c. The treatment solution 21 that has passed through the filter 303c is returned to the solution vessel 20. By circulating the treatment solution 21 in such a manner, the treatment solution 21 in the solution vessel 20 can be stirred, a combined effect can be exhibited together with stirring by the stirring wings 301, and the surface of the glass base material 22 can be uniformly treated.

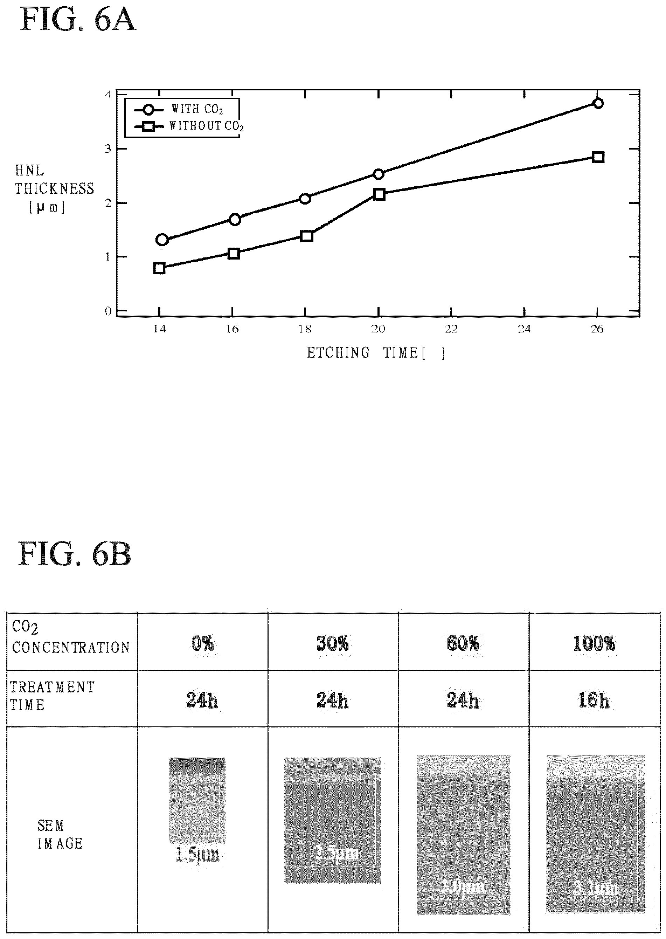

Furthermore, the net-like structure layer production device 1 includes control gas supply means 50 for supplying gas (hereinafter referred to as "control gas") that controls a treatment speed of the treatment solution 21. In the present embodiment, carbon dioxide (CO₂) is supplied as the control gas to the treatment solution 21. The control gas supply means 50 directly supplies carbon dioxide to the solution vessel 20. Sodium hydrogencarbonate easily breaks down and generates carbon dioxide, but separation can be prevented by supplying carbon dioxide, and a decrease in a treatment rate can be suppressed. Therefore, a decrease in a treatment rate can be suppressed by injecting carbon dioxide into the treatment solution 21 being hydrogencarbonate. FIG. 6A is a graph illustrating a relationship between a film thickness of a hierarchical nano porous layer produced on the surface of the glass base material 22 immersed in the treatment solution 21, and a treatment time. As illustrated in the graph, it is clear that treatment is completed in a short time by supply of carbon dioxide. Further, the treatment rate becomes stable by addition of carbon dioxide, and a correlation between a treatment time and a treatment amount becomes higher, and thus the treatment amount of the glass base material 22 can be more accurately controlled. As illustrated in FIG. 6B, it is clear that a thickness of a net-like structure layer increases as a concentration of added carbon dioxide increases. Furthermore, it is clear that a mesh size of the net-like structure layer varies depending on a concentration of added carbon dioxide increases. When a case where a concentration of carbon dioxide is 60% is compared with a case where the concentration is 100%, a thickness of the net-like structure layer is almost equal, but a mesh size is larger and an antireflection function is further enhanced in the case of 100%. The antireflection function can also be caused to appear in a shorter time by increasing the concentration of carbon dioxide.

In the present modified example, carbon dioxide is supplied as the control gas, but gas generated when the treatment solution 21 breaks down may be supplied as the control gas to the treatment solution 21 and treatment may be accelerated. The control gas is water-soluble, and may be supplied into a space of the net-like structure layer production device 1 or may be directly supplied to the treatment solution 21. Acid gas may be introduced as the control gas, and treatment may be suppressed. As the acid gas, hydrochloric acid gas or hydrogen sulfide gas may be used. In such a manner, the control gas for controlling a treatment speed may be appropriately selected according to a treatment solution to be used and a treatment purpose. The control gas to be supplied may be appropriately selected by measuring a film thickness of the net-like structure layer, and a reaction speed of the treatment solution may be controlled.

In the present modified example, the glass base material 22 may be disposed horizontally or vertically in the solution vessel 20. Since only the solution stirring system is adopted instead of the base material rotation system as the stirring system, an arrangement direction of the glass base material 22 can have a degree of freedom. Therefore, the glass base material 22 can be disposed horizontally or vertically according to an installation place.

According to the present modified example, the treatment solution 21 can be sufficiently stirred by stirring by the stirring wings 301 and circulation of the treatment solution 21 by the circulation means 303, and a decrease in the treatment function of the treatment solution 21 can also be prevented by directly adding carbon dioxide to the treatment solution 21.

### Modified Example 2

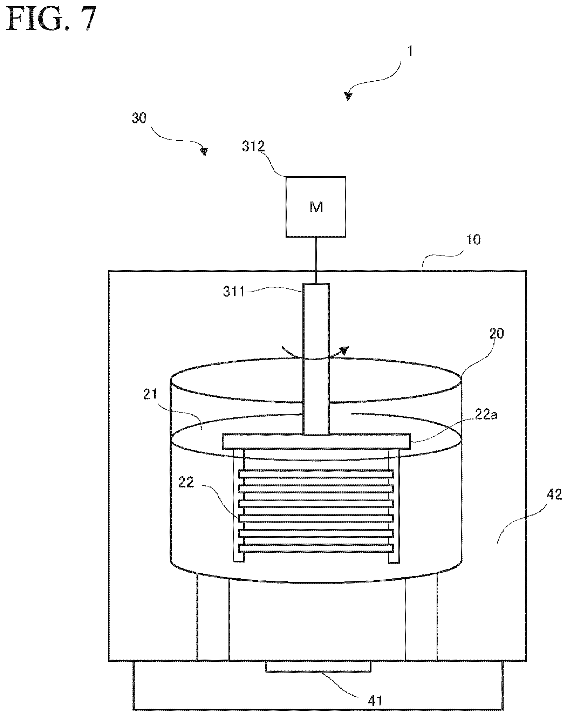

Modified Example 2 is described with reference to FIG. 7. A basic configuration of the net-like structure layer production device 1 is similar to that in the embodiment, and the solution vessel 20 is disposed in the pressure vessel 10, the treatment solution 21 is put in the solution vessel 20, and the glass base material 22 is immersed in the treatment solution 21. The inside of the pressure vessel 10 is pressurized by generating the vapor 42 by the heater 41. The plurality of glass base materials 22 is held by the base material holding member 22a such as a rack. As the base material holding member 22a in the present modified example, a hanging rack in which a rotating shaft 311 is attached to an upper portion is used. The plurality of glass base materials 22 is held by the base material holding member 22a and housed in the rack in such a way as to be set horizontal.

The base material rotation system is used as the stirring means 30. The stirring means 30 includes the rotating shaft 311, and a motor 312 that rotates the rotating shaft 311. The base material holding member 22a rotates by rotation of the rotating shaft 311 by the motor 312, and the treatment solution 21 in the solution vessel 20 is stirred by rotation of the base material holding member 22a and the plurality of glass base materials 22. A rotation direction of the base material holding member 22a may be rotated in a fixed direction, or may be rotated alternately in the fixed direction and an opposite direction. By rotating the base material holding member 22a alternately in the fixed direction and the opposite direction, great flow and shearing force can be generated.

According to the present modified example, the base material holding member 22a that houses the plurality of glass base materials 22 is rotated by the rotating shaft 311 attached to the upper portion of the base material holding member 22a, and the treatment solution 21 is stirred. Since such a base material rotation system is used, stirring force is stronger than the solution stirring system, and the treatment solution 21 can be sufficiently stirred. With the configuration for attaching the rotating shaft 311 to the upper portion of the base material holding member 22a, immersion of the base material holding member 22a in the treatment solution 21 and pulling-up are facilitated.

### Modified Example 3

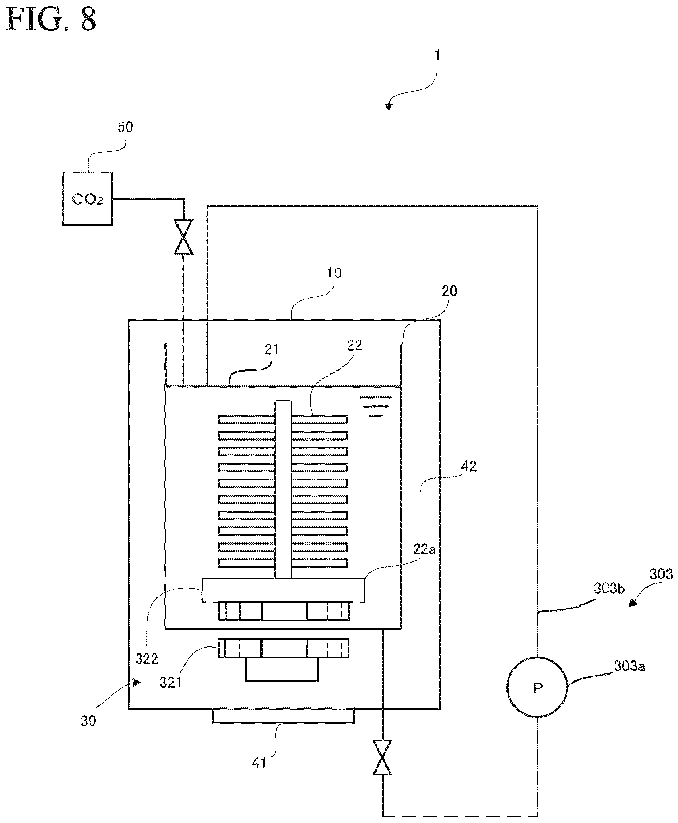

Modified Example 3 is described with reference to FIG. 8. A basic configuration of the net-like structure layer production device 1 is similar to that in the embodiment, and the solution vessel 20 is disposed in the pressure vessel 10, the treatment solution 21 is put in the solution vessel 20, and the glass base material 22 is immersed in the treatment solution 21. The inside of the pressure vessel 10 is pressurized by generating the vapor 42 by the heater 41. The plurality of glass base materials 22 is held by the base material holding member 22a and disposed horizontally.

A non-contact driver in the base material rotation system is used as the stirring means 30. In other words, the stirring means 30 includes a driving rotator 321 and a driven rotator 322. The driving rotator 321 is a disc rotator, is disposed outside the bottom portion of the solution vessel 20, and is rotated by a motor (not illustrated). The driving rotator 321 and the driven rotator 322 are operated similarly to FIG. 4, and thus the treatment solution 21 is stirred.

In the present modified example, the circulation means 303 for circulating the treatment solution 21 is further provided similarly to Modified Example 1. The circulation means 303 includes the pump 303a, and the pipe 303b that connects the solution vessel 20 and the pump 303a. By operating the pump 303a, the treatment solution 21 is sucked out of the bottom portion of the solution vessel 20 and then returned to the solution vessel 20 again. By circulating the treatment solution 21 in such a manner, the treatment solution 21 in the solution vessel 20 is stirred, and a combined effect is exhibited together with stirring by the stirring means 30.

In the present modified example, the control gas supply means 50 for adding carbon dioxide to the treatment solution 21 may be further provided similarly to Modified Example 1.

In the present modified example, the stirring system in the base material rotation system is used as the stirring means 30, and the circulation means 303 is further provided, and thus the treatment solution 21 can be sufficiently stirred. Further, the base material holding member 22a and the glass base material 22 rotate in a non-contact manner, and thus contamination in the pressure vessel 10 can be prevented. Furthermore, a decrease in the treatment function of the treatment solution 21 can be prevented by directly adding carbon dioxide to the treatment solution 21 in the solution vessel 20.

### Modified Example 4

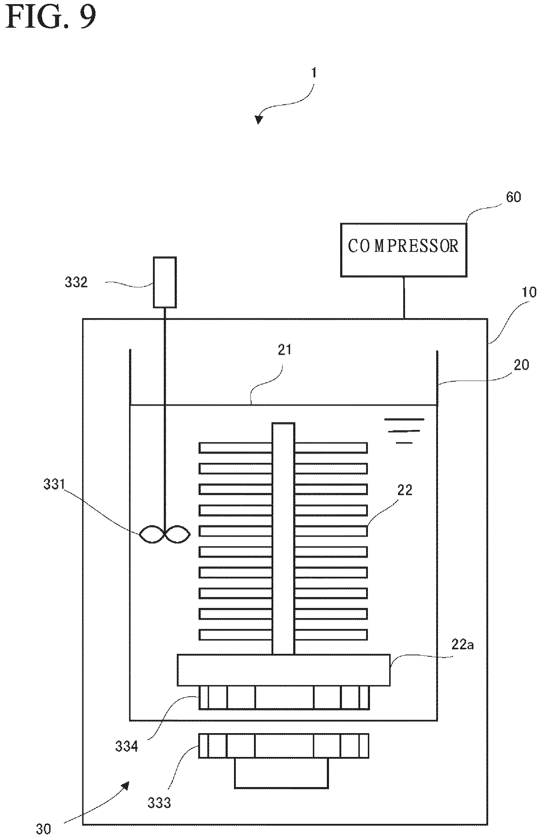

Modified Example 4 is described with reference to FIG. 9. A basic configuration of the net-like structure layer production device 1 is similar to that in the embodiment, and the solution vessel 20 is disposed in the pressure vessel 10, the treatment solution 21 is put in the solution vessel 20, and the glass base material 22 is immersed in the treatment solution 21. The plurality of glass base materials 22 is held by the base material holding member 22a, and the glass base material 22 is disposed horizontally. A point in which a compressor 60 is used as the pressurization means instead of using the heater 41 and the vapor 42 is different from the other modified examples.

A combination of the solution stirring system and the base material rotation system is used as the stirring means 30. The stirring means 30 in the solution stirring system includes a stirring wing 331, and a driver 332 that rotates and drives the stirring wing 331. In the present modified example, the stirring wing 331 is one.

A non-contact driver is used as the stirring means 30 in the base material rotation system, and the stirring means 30 includes a driving rotator 333 and a driven rotator 334. A shape and a function of the driving rotator 333 and the driven rotator 334 are the same as those in Modified Example 3, and description is omitted herein. The driven rotator 334 rotates in a non-contact manner by rotation of the driving rotator 333. The base material holding member 22a is placed on an upper surface of the driven rotator 334, and the base material holding member 22a rotates by rotation of the driven rotator 334, and the glass base material 22 also rotates. The treatment solution 21 is stirred by the rotation of the glass base material 22.

In the present modified example, the compressor 60 is used as the pressurization means. The inside of the pressure vessel 10 is pressurized by being injected with air compressed by the compressor 60. Since water does not need to be heated by using the heater 41, a size of the pressure vessel 10 can be made compact. Further, instead of the air, the control gas may be compressed by the compressor 60 and introduced in the pressure vessel 10.

According to the present modified example, a combination of the solution stirring system and the base material rotation system is used as the stirring means 30. Therefore, the treatment solution 21 is sufficiently stirred, and an in-plane distribution of the treatment layer is made uniform. Since the stirring wing 331 may be only one, the structure of the pressure vessel 10 can be simplified.

### Modified Example 5

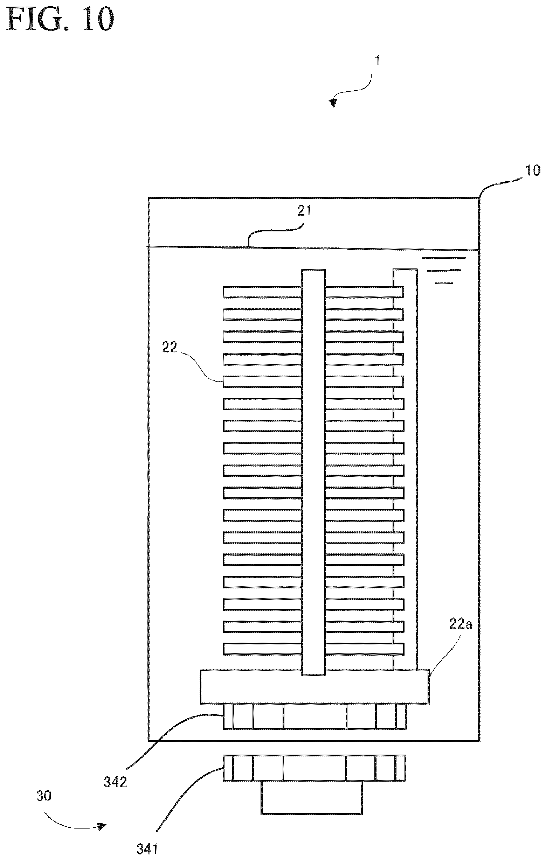

Modified Example 5 is described with reference to FIG. 10. A basic configuration of the net-like structure layer production device 1 is similar to that in the embodiment in a point in which the treatment solution 21 is put in the pressure vessel 10, and the glass base material 22 is immersed in the treatment solution 21, but the present modified example is different in a point in which the treatment solution 21 is directly put in the pressure vessel 10 instead of being put in the solution vessel 20. The plurality of glass base materials 22 is held by the base material holding member 22a, and the glass base material 22 is disposed horizontally.

A non-contact driver in the base material rotation system is used as the stirring means 30, and the stirring means 30 includes a driving rotator 341 and a driven rotator 342. A shape and a function of the driving rotator 341 and the driven rotator 342 are the same as those in Modified Example 3, and description is omitted herein. The driven rotator 342 rotates in a non-contact manner by rotation of the driving rotator 341. The base material holding member 22a is placed on an upper surface of the driven rotator 342, and the base material holding member 22a rotates by rotation of the driven rotator 342, and the glass base material 22 also rotates. The treatment solution 21 is stirred by the rotation of the glass base material 22.

According to the present modified example, the treatment solution 21 is directly put in the pressure vessel 10, and thus the structure of the net-like structure layer production device 1 can be simplified. Since the solution vessel 20 does not need to be put in the pressure vessel 10, a space in the pressure vessel 10 can be effectively used, and a great number of the glass base materials 22 can be treated.

According to the present embodiment, the glass base material 22 is immersed in the treatment solution 21 and put in the pressure vessel 10, and the treatment solution 21 is stirred while pressure is applied. Therefore, treatment can be achieved in a short time while unevenness occurring in the surface treatment of the glass base material 22 is reduced, and the net-like structure layer having a sufficient film thickness for having the soil-resistant function and the like can be produced.

According to the present embodiment, treatment unevenness can be reduced, and thus treatment of a large substrate and treatment of a great number of substrates can be achieved.

According to the present embodiment, the treatment solution 21 can be stirred by rotating the glass base material 22, and thus the entire treatment solution 21 in the solution vessel 20 can be sufficiently stirred, and uniform surface treatment of the glass base material 22 can be achieved.

According to the present embodiment, the treatment solution 21 can be directly stirred by using the stirring wing 35, and thus the treatment solution 21 can be stirred by a simple method, and uniform surface treatment of the glass base material 22 can be achieved.

According to the present embodiment, the glass base material 22 can be rotated in a non-contact manner, and thus it is unnecessary to put a drive source such as an introduction port in the pressure vessel 10, and the structure of the net-like structure layer production device 1 can be simplified, which results in a cost reduction.

According to the present embodiment, both of the pressurization means and the heating means are provided, and thus a temperature of the treatment solution 21 in the pressure vessel 10 can be rapidly increased, and the surface treatment of the glass base material 22 can be quickly performed.

According to the present embodiment, the gas supply means supplies the same control gas as gas generated by a reaction of the treatment solution 21, and thus the reaction of the treatment solution 21 can be accelerated.

In the present embodiment and Modified Examples 1 to 4, the treatment solution 21 is not directly put in the pressure vessel 10, and the treatment solution 21 is put in the solution vessel 20 having high durability. Therefore, the net-like structure layer production device 1 can be used longer, which results in a cost reduction.

In the present embodiment, the pressure vessel 10 and the solution vessel 20 are made of an alkali-resistant material, and thus the life of the net-like structure layer production device 1 can be increased, which results in a cost reduction.

The glass base material 22 treated in the present embodiment is not limited to a plate-shaped glass base material.

In the present embodiment, the non-contact driver and the contact driver are used in combination, but only the non-contact driver or only the contact driver may be used. Further, a combination can also be appropriately selected.

In the present embodiment and Modified Examples 3, 4, and 5, the treatment solution 21 is stirred by rotating, by the non-contact driver, the base material holding member 22a that holds the glass base material 22, but the present disclosure is not limited to stirring by rotation. For example, by shaking the second magnetic body of the non-contact driver, the first magnetic body may be shaken, and the solution may be stirred.

In the present embodiment, description is given that the pressure vessel 10 and the solution vessel 20 are made of a corrosion-resistant material, but a member disposed inside the net-like structure layer production device 1, such as the non-contact driver and the contact driver, may be made of a corrosion-resistant material.

In Modified Examples 1 and 3, the circulation means 303 using the pump 303a that plays a role in assisting the stirring means 30 is described. Means for assisting with or strengthening stirring by the stirring means 30 is not limited to the circulation means 303. For example, a flow of a fluid may be generated in the solution vessel 20 by providing means for supplying new treatment solution 21 and means for discharging used treatment solution 21 inside.

In the present embodiment and Modified Example 4, performing pressurization by generating the vapor 42 by the heater 41 and sending compressed air by the compressor 60 into the pressure vessel 10 are described as the pressurization means 40. The present disclosure is not limited to the pressurization means 40, and pressurization may be performed by sending the vapor 42 generated outside into the pressure vessel 10, for example.

In the present embodiment and the modified examples, various combinations of the stirring means 30, the pressurization means 40, and the control gas supply means 50 are described, but the described combinations are merely one example, and the present disclosure is not limited to the described examples. Furthermore, various aspects are included in the stirring means 30 and the pressurization means 40, and which aspect is selected from among various aspects is also not limited.

### Industrial Applicability

The present disclosure can be used for a net-like structure layer production device that treats a surface of a glass base material, and a method for manufacturing glass including a net-like structure layer.

### Reference Signs List

- 1: Net-like structure layer production device
- 10: Pressure vessel
- 11: Barrel portion
- 11a: First support portion
- 11aa: Support portion main body
- 11ab: Gear support portion
- 11b: Second support portion
- 11ba: Support portion main body
- 11bb: Gear support portion
- 12: Upper end plate
- 13: Lower end plate
- 14: Leg
- 20: Solution vessel
- 21: Treatment solution
- 22: Glass base material
- 22a: Base material holding member
- 30: Stirring means
- 31: First non-contact driver
- 31a: First driving rotator
- 31b: First driven rotator
- 32: First contact driver
- 32a: First spur gear
- 32b: Second spur gear
- 32c: Third spur gear
- 32d: Fourth spur gear
- 33: Second non-contact driver
- 33a: Second driving rotator
- 33b: Second driven rotator
- 34: Second contact driver
- 34a: First bevel gear
- 34b: Second bevel gear
- 34c: Third bevel gear
- 34d: Fourth bevel gear
- 34e: First drive shaft
- 34f: Second drive shaft
- 34g: Third drive shaft
- 35: Stirring wing
- 40: Pressurization means
- 41: Heater
- 42: Vapor
- 50: Control gas supply means
- 60: Compressor
- 301: Stirring wing
- 302: Motor
- 303: Circulation means
- 303a: Pump
- 303b: Pipe
- 302c: Filter
- 311: Rotating shaft
- 312: Motor
- 321: Driving rotator
- 322: Driven rotator
- 331: Driving rotator
- 332: Driven rotator
- 331: Stirring wing
- 332: Motor
- 333: Driving rotator
- 334: Driven rotator
- 341: Driving rotator
- 342: Driven rotator

## Claims

1. A net-like structure layer production device that produces a net-like structure layer on a surface of a glass base material, the net-like structure layer production device comprising:
a pressure vessel that houses, under predetermined pressure, a treatment solution and a glass base material immersed in the treatment solution;
pressurization means for pressurizing the pressure vessel; and
stirring means for stirring the treatment solution, wherein
a net-like structure layer is produced on a surface of the glass base material in the treatment solution under an alkaline environment.

2. The net-like structure layer production device according to claim 1, further comprising:
heating means for heating an inside of the pressure vessel.

3. The net-like structure layer production device according to claim 1, wherein the stirring means is base material rotation means for stirring the treatment solution by rotating the glass base material.

4. The net-like structure layer production device according to claim 1, wherein the stirring means is solution stirring means for directly stirring the treatment solution by a stirring member.

5. The net-like structure layer production device according to claim 1, further comprising:
control gas supply means for supplying, to the treatment solution, control gas that controls a treatment speed of the treatment solution.

6. The net-like structure layer production device according to claim 5, wherein
the treatment solution is a solution containing hydrogencarbonate, and
the control gas supply means supplies the same control gas as gas generated by a reaction of the treatment solution.

7. The net-like structure layer production device according to claim 3, further comprising:
a base material holding member that holds the glass base material in the treatment solution, wherein
the base material rotation means rotates the base material holding member.

8. The net-like structure layer production device according to claim 2, wherein the glass base material is treated in the treatment solution at 100°C or higher by the heating means.

9. The net-like structure layer production device according to claim 7, wherein the base material rotation means rotates the base material holding member in a non-contact manner by a first magnetic body attached to the base material holding member and a second magnetic body disposed outside a vessel that houses the treatment solution.

10. The net-like structure layer production device according to any one of claims 1 to 9, further comprising a solution vessel disposed inside the pressure vessel, wherein
the treatment solution and the glass base material are housed in the solution vessel.

11. The net-like structure layer production device according to claim 10, wherein the pressure vessel or the solution vessel is made of an alkali-resistant material.

12. A method for manufacturing glass including a net-like structure layer by treating glass by a treatment solution in a pressure vessel, the method comprising:
pressurizing an inside of the pressure vessel;
stirring the treatment solution in the pressure vessel; and
producing a net-like structure layer on a surface of a glass base material by the treatment solution under an alkaline environment.
